# EUROPÄISCHE PATENTSCHRIFT

(11) **EP 2 110 869 B1**
(45) Veröffentlichungstag und Bekanntmachung des Hinweises auf die Patenterteilung: **27.01.2016**
(21) Anmeldenummer: 09008140.7
(22) Anmeldetag: 30.11.2006
(51) Int. Cl.: H01M 2/02, H01M 2/04, H01M 2/08

(54) **Galvanisches Element mit neuartigem Gehäuse**
Galvanic element with innovative housing
Elément galvanique doté d'un boîtier de type nouveau

(30) Priorität: 30.11.2005 DE 102005058132
(43) Veröffentlichungstag der Anmeldung: 21.10.2009
(62) Teilanmeldung aus: 06818929.9
(73) Patentinhaber: VARTA Microbattery GmbH, 73479 Ellwangen (DE)
(72) Erfinder: Brenner, Rolf, 73479 Ellwangen (DE); Kreidler, Bernd, 73479 Ellwangen (DE); Ilic, Dejan, 73479 Ellwangen (DE); Holl, Konrad, 73434 Aalen-Dewangen (DE); Ernsperger, Jürgen, 73491 Neuler (DE)
(74) Vertreter: Patentanwaltskanzlei Cartagena

(56) Entgegenhaltungen:
- EP-A1- 0 731 516
- DE-A1- 19 647 593
- US-A- 5 919 586
- US-A1- 2002 127 467

## Beschreibung

Die vorliegende Erfindung betrifft ein galvanisches Element, insbesondere eine Knopfzelle, mit einem Gehäuse umfassend einen Gehäusebecher, einen Gehäusedeckel und eine Foliendichtung, die den Gehäusebecher gegen den Gehäusedeckel isoliert, und ein Verfahren zur Herstellung eines solchen galvanischen Elements.

Galvanische Elemente, insbesondere solche in Knopfzellenform, weisen üblicherweise ein Gehäuse aus einem Gehäusebecher (oft auch als Gehäusenapf bezeichnet) und einem Gehäusedeckel auf. Der Gehäusebecher kann beispielsweise aus vernickeltem Tiefziehblech als Stanzziehteil hergestellt werden. Gewöhnlich ist der Gehäusebecher positiv und der Gehäusedeckel negativ gepolt. Derartige galvanische Elemente können die verschiedensten elektrochemischen Systeme enthalten, beispielsweise Zink/MnO₂, primäre Lithium-Systeme oder auch sekundäre Systeme wie Nickel/Cadmium, Nickel/Metallhydrid oder sekundäre Lithium-Systeme.

Der flüssigkeitsdichte Verschluß solcher Zellen erfolgt gewöhnlich durch Umbördeln des Becherrandes über den Rand des Gehäusedeckels in Verbindung mit einem Kunststoffring, der zwischen Gehäusebecher und Gehäusedeckel angeordnet ist und gleichzeitig als Dichtungselement sowie zur Isolierung des Gehäusebechers und des Gehäusedeckels dient. Derartige Knopfzellen sind beispielsweise der DE 31 13 309 zu entnehmen.

Die für diese Knopfzellen erforderlichen Dichtungselemente werden üblicherweise im Spritzgießverfahren, beispielsweise aus Polyamiden hergestellt. Die dazu notwendigen Spritzwerkzeuge sind teuer und aufwendig zu warten. Darüber hinaus ist es praktisch nicht möglich, durch Spritzguß Dichtungselemente mit Wandungen in einer Dicke von weniger als 0,3 mm herzustellen. Im Spritzgießverfahren hergestellte Dichtungen beanspruchen folglich ein verhältnismäßig großes Volumen und beeinträchtigen damit die Kapazitätsausnutzung einer Zelle, was insbesondere bei Knopfzellen eine große Rolle spielen kann.

In der DE 196 47 593 wird der Einsatz eines Dichtungselements beschrieben, das durch Tiefziehen aus einer Folie hergestellt wird. Aus einer beheizten Folie wird mittels einer Ziehmatrize und eines Formstempels unter Vakuum ein becherförmiges Formteil gezogen. Als bevorzugtes Folienmaterial werden Polyamide angegeben. Die Verformung erfolgt abhängig vom gewünschten Durchmesser/Höhen-Verhältnis in einem oder mehreren abgestuften Arbeitsgängen. Im Bodenbereich des durch Tiefziehen hergestellten becherförmigen Formteils erfolgt anschließend eine Ausstanzung mittels eines Schnittstempels und einer Schnittbuchse. Das so hergestellte Dichtungselement wird auf einen Gehäusedeckel montiert, der dann in einen Gehäusebecher eingesetzt werden kann. In Abhängigkeit der gewählten Verfahrensparameter lassen sich mit dem in der DE 196 47 593 beschriebenen Verfahren bis zu 5 mm hohe Dichtungselemente mit sehr gleichmäßigen Wandstärken herstellen. Die Dicke des Ausgangsmaterials liegt dabei vorzugsweise im Bereich zwischen 0,1 mm und 0,3 mm. Wenn beispielsweise eine Folie mit einer Stärke von 0,15 mm als Ausgangsmaterial verwendet wird, ist eine Wandstärke von ca. 0,12 mm erzielbar.

Die Verwendung einer solch dünnen Foliendichtung vergrößert das zur Verfügung stehende Innenvolumen einer galvanischen Zelle der oben genannten Bauart und resultiert somit in einer deutlichen Kapazitätsverbesserung.

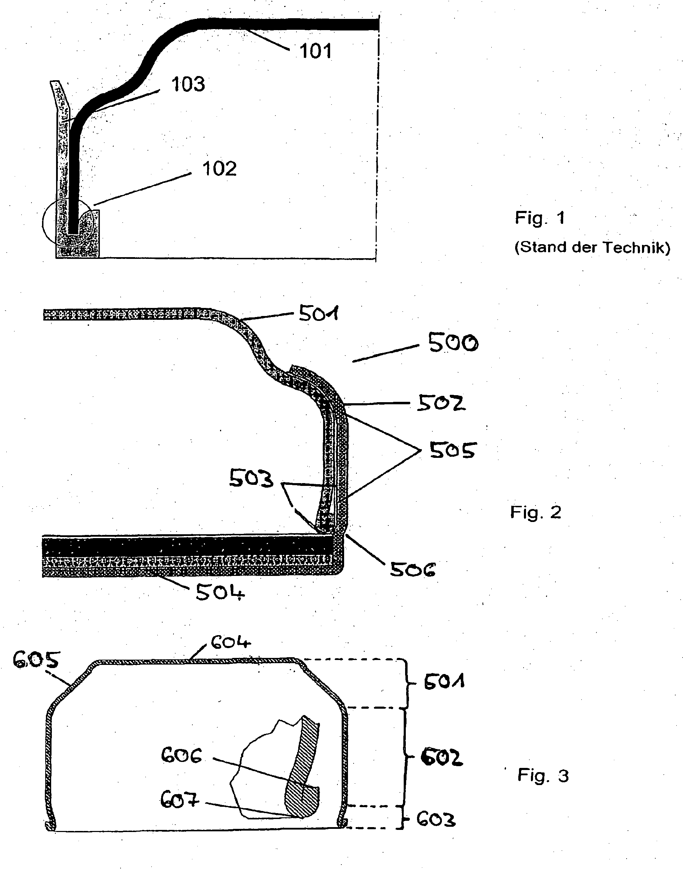

Bei Verwendung herkömmlicher einwandiger Gehäusedeckel (schematisch in Fig. 1 dargestellter Stand der Technik) in Verbindung mit Dichtungselementen aus Folien haben sich allerdings Probleme ergeben. Herkömmliche Deckel sind gerade im Randbereich sehr labil. Sie weisen am Rand häufig scharfe Schnittkanten auf, die unter ungünstigen Umständen eine als Dichtungselement verwendete Folie durchschneiden können. Auch ist die Auflagefläche solcher Deckel sehr gering, so dass gegebenenfalls schon bei geringem Druck ein teilweises Eindringen des Deckels mitsamt Foliendichtung in die Kathode möglich ist.

Aus dem Stand der Technik sind auch Gehäusedeckel mit durch Umschlagen des Randes gebildetem doppelwandigem Gehäusemantel bekannt (siehe DE 196 47 593). Deren Verwendung vermag die angesprochenen, in Verbindung mit Foliendichtungen auftretenden Probleme durchaus zu lösen. Der Einsatz solcher Gehäusedeckel gewährleistet eine erhöhte Stabilität, scharfe Kanten im Randbereich treten nicht auf, und auch die Auflagefläche solcher Deckel ist gegenüber der herkömmlicher Gehäusedeckel deutlich erhöht.

Allerdings wirkt sich die Verwendung doppelwandiger Gehäusedeckel negativ auf das zur Verfügung stehende Innenvolumen in einer Zelle aus. Die durch den Einsatz von Foliendichtungen theoretisch erzielbare Kapazitätssteigerung wird in der Folge nicht erreicht.

Aus der EP 0 731 516 sind Knopfzellen bekannt, die ein Gehäuse mit einem Zellendeckel aufweisen, dessen Rand im äußersten Randbereich U-förmig nach außen umgeschlagen ist. Das Innenvolumen der beschriebenen Knopfzelle ist somit optimiert. Allerdings weist die beschriebene Zelle eine sehr massive Spritzgussdichtung auf, die den Zellendeckel vom Zellenbecher separiert. Der Kapazitätsgewinn durch das Umschlagen des Randes des Zellendeckels geht somit auch schnell wieder verloren.

Aus der US 5,919,586 sind ebenfalls Knopfzellendeckel mit nach außen umgeschlagenem Rand bekannt. Der umgeschlagene Randbereich ist gemäß der US 5,919,586 allerdings radial nach innen eingezogen, so dass der Knopfzellendeckel in diesem Randbereich einen gegenüber seinem zylinderförmigen Hauptsegment verringerten Außendurchmesser aufweist.

Der vorliegenden Erfindung lag die Aufgabe zugrunde, eine galvanische Zelle der eingangs genannten Bauart bereitzustellen, die sich durch ein optimiertes Innenvolumen und damit eine optimierte Kapazitätsausnutzung auszeichnet und die zugleich über hervorragende Dichtungseigenschaften verfügt.

Bevorzugte Ausführungsformen dieses galvanisehen Elements sind in den abhängigen Ansprüchen 2 bis 10 dargestellt. Der Wortlaut sämtlicher Ansprüche wird hiermit durch Bezugnahme zum Inhalt dieser Beschreibung gemacht.

Ein galvanisches Element gemäß der vorliegenden Erfindung liegt in besonders bevorzugter Ausführungsform als Knopfzelle vor. Es weist ein Gehäuse mit einem Gehäusebecher, einem Gehäusedeckel und einer Foliendichtung auf. Letztere isoliert den Gehäusebecher gegen den Gehäusedeckel.

Besonders zeichnet sich ein erfindungsgemäßes galvanisches Element durch seinen Gehäusedeckel aus. Dieser weist einen Deckelboden, daran angeschlossen einen zylindrisch ausgebildeten Abschnitt und einen sich an diesen anschließenden Randabschnitt auf, wobei der Rand des Gehäusedeckels im Randabschnitt nach außen umgebogen ist.

Infolge des Umbiegens des Gehäusedeckels liegen gegebenenfalls am Rand des Gehäusedeckels auftretende scharfe Schnittkanten nicht senkrecht auf der Foliendichtung auf, was die Gefahr einer Beschädigung der Foliendichtung stark verringert.

Darüber hinaus weist ein erfindungsgemäßes galvanisches Element neben den bereits erwähnten verbesserten Sicherheitseigenschaften im Hinblick auf eine Beschädigung der Foliendichtung insbesondere auch eine deutlich verbesserte Kapazitätsausnutzung auf. Im Gegensatz zu den aus der DE 196 47 593 bekannten galvanischen Elementen mit durch Umschlagen des Randes gebildetem doppelwandigem Gehäusemantel ist vorliegend der Rand nur im Randabschnitt umgebogen. Ein breiter, doppelwandiger Bereich, wie ihn aus dem Stand der Technik bekannte Gehäusedeckel aufweisen, wird im vorliegenden Fall nicht gebildet. Damit ergibt sich lediglich im Randabschnitt eine Einschränkung des Innenvolumens des Gehäuses eines erfindungsgemäßen galvanischen Elements.

Der Randabschnitt eines erfindungsgemäßen galvanisches Elements weist einen im wesentlichen U-förmigen Querschnitt auf. Der Rand ist in dieser Ausführungsform so weit nach außen umgebogen, dass der umgebogene Bereich im wesentlichen parallel zu nicht umgebogenen Bereichen des Randabschnitts ausgerichtet ist. Ausgehend von diesen ist er also um ca. 180° nach außen umgebogen, so dass man auch von einem umgeschlagenen Rand sprechen kann.

Zwischen den parallel zueinander ausgerichteten Bereichen befindet sich gegebenenfalls ein Spalt. Vorzugsweise liegt der umgebogene Randbereich jedoch außen unmittelbar am Gehäusedeckel an.

Es ist weiter bevorzugt, dass der umgebogene Rand radial nach innen eingezogen ist.

In dieser Ausführungsform weist der Gehäusedeckel im Randabschnitt vorzugsweise einen maximalen Außendurchmesser auf, der im wesentlichen dem Außendurchmesser des oberhalb des Randabschnitts angeordneten, zylindrisch ausgebildeten Abschnitts entspricht. Der Innendurchmesser des Randabschnitts ist in dieser Ausführungsform gegenüber dem Innendurchmesser des zylindrisch ausgebildeten Abschnitts verengt.

Es kann aber auch bevorzugt sein, dass der Außendurchmesser des Randabschnitts den des zylindrisch ausgebildeten Abschnitts leicht überschreitet, was im Hinblick auf die Dichtigkeit eines erfindungsgemäßen galvanischen Elements von Vorteil sein kann (der Randabschnitt drückt in einem fertig montierten Gehäuse fest an den Becherrand bzw. an eine zwischen Becherrand und Gehäusedeckel angeordneten Foliendichtung). Die Abweichung nach außen beträgt in diesen Ausführungsformen vorzugsweise weniger als 50 % der Wandstärke des Gehäusedeckels.

In einer weiteren bevorzugten Ausführungsform weist ein erfindungsgemäßes galvanisches Element ein Gehäuse auf, das einen Gehäusebecher mit einem Becherboden und einem im wesentlichen zylindrisch ausgebildeten Bechermantel sowie einen Gehäusedeckel mit einem Deckelboden und einem umlaufenden, im wesentlichen zylindrisch ausgebildeten Abschnitt umfaßt. Eine Foliendichtung isoliert den Gehäusebecher und den Gehäusedeckel gegeneinander. Der zylindrisch ausgebildete Abschnitt des Gehäusedeckels liegt im verschlossenen Zustand des Gehäuses an der Innenwand des Gehäusebechers an. An ihn schließt sich ein Randabschnitt an. Es ist bevorzugt, dass dieser im verschlossenen Zustand des Gehäuses im Bodenbereich des Gehäusebechers aufsitzt. Der zylindrisch ausgebildete Abschnitt des Gehäusedeckels weist bevorzugt über seine gesamte Länge einen im wesentlichen gleichmäßigen Außendurchmesser auf, der auf den entsprechenden Innendurchmesser des Gehäusebechers eingestellt ist. Davon abweichend ist der Außendurchmesser des Gehäusedeckels in dieser bevorzugten Ausführungsform im Randabschnitt nicht konstant, da der Rand des Gehäusedeckels U-förmig nach außen umgebogen und radial nach innen eingezogen ist. Vorzugsweise überschreitet der Außendurchmesser des Gehäusedeckels im Randabschnitt an keiner Stelle den Außendurchmesser des zylindrisch ausgebildeten Deckelabschnitts. Wie oben bereits erwähnt, gibt es aber auch bevorzugte Ausführungsformen, in denen der Außendurchmesser des Randabschnitts den des zylindrisch ausgebildeten Abschnitts leicht überschreiten kann.

Es ist bevorzugt, dass weniger als 0,5 mm des Gehäusedeckels eines erfindungsgemäßen galvanischen Elements nach außen umgebogen, insbesondere umgeschlagen, sind. Besonders bevorzugt sind es 0,1 mm bis 0,35 mm, insbesondere nur ca. 0,25 mm. Diese Zahlen verdeutlichen weiter den Unterschied zum Stand der Technik, aus dem lediglich Gehäusedeckel mit einem durch Umschlagen des Randes gebildeten, doppelwandigen Bereich bekannt sind, welcher sich in der Regel mindestens über die halbe Höhe (mehrere Millimeter) des Gehäusedeckels erstreckt.

Die Foliendichtung eines erfindungsgemäßen galvanisches Elements ist insbesondere aus einer tiefziehbaren Folie gebildet. Grundsätzlich kommen dafür alle gängigen, tiefziehbaren Kunststoffe in Betracht, insbesondere auch Komposite und Sandwichstrukturen aus mehreren verschiedenen Kunststoffen. Besonders bevorzugt ist die Foliendichtung aus einem Polyamid gebildet.

In einer weiteren bevorzugten Ausführungsform ist die Foliendichtung aus einer hochtemperaturbeständigen Folie gebildet. Foliendichtungen aus einer hochtemperaturbeständigen Folie sind insbesondere für Knopfzellen geeignet, die im Elektronikbereich eingesetzt werden. Dabei werden Platinen mit Knopfzellen sowie weiteren (insbesondere elektronischen) Bauteilen bestückt und im Schwallbad oder nach der Reflow-Technik verlötet. Kurzzeitig können sich die Knopfzellen dabei auf Temperaturen von bis zu 250 °C aufheizen. Dichtungen aus Polyethylen oder aus Polyamiden erweichen bei diesen Temperaturen bereits und verlieren ihre Form. Die Folgen sind Undichtigkeiten und auslaufende Zellen.

In einer besonders bevorzugten Ausführungsform ist die Foliendichtung deshalb aus Polyetheretherketon (PEEK) gebildet. Dichtungen aus diesem Material können dauerhaft auf 250 °C, kurzzeitig sogar auf 300 °C, erhitzt werden. Aufgrund seiner Fließeigenschaften ist die Herstellung von Dichtungen aus PEEK durch Spritzgießen nicht möglich. Als Folie läßt es sich aber leicht zu einer Dichtung ziehen.

Die Herstellung der Foliendichtung eines erfindungsgemäßen Elements erfolgt bevorzugt als Formteil wie in der DE 196 47 593 beschrieben. Es ist bevorzugt, dass das so hergestellte Dichtungsformteil nach seiner Herstellung auf einen Gehäusedeckel montiert wird, der dann in einen Gehäusebecher eingesetzt werden kann. Im verschlossenen Zustand des Gehäuses eines erfindungsgemäßen galvanischen Elements ist die Foliendichtung vorzugsweise umlaufend auf dem Gehäusedeckel angeordnet, wobei es dabei weiter bevorzugt ist, dass sie eine ins Zellinnere weisende überlappung im Randbereich des Gehäusedeckels aufweist. In Richtung des Deckelbodens reicht die Foliendichtung vorzugsweise so weit, dass beim Umbördeln des Gehäusebechers ein direkter Kontakt zwischen Gehäusebecher und Gehäusedeckel ausgeschlossen ist.

In einer bevorzugten Ausführungsform ist die Foliendichtung auf den Gehäusedeckel aufgeschrumpft. Auch der Vorgang des Aufschrumpfens ist in der DE 196 47 593 beschrieben.

Vorzugsweise werden Foliendichtungen verwendet, die eine Dicke zwischen 0,01 mm und 0,3 mm aufweisen. Besonders bevorzugt sind Foliendichtungen mit einer Dicke zwischen 0,01 mm und 0,15 mm, insbesondere zwischen 0,08 mm und 0,12 mm.

In einer bevorzugten Ausführungsform eines erfindungsgemäßen galvanischen Elementes ist, insbesondere zur Abdichtung gegen Kriecheffekte, im Randabschnitt des Gehäusedeckels zwischen Foliendichtung und Deckel eine Dichtmasse eingebracht. Bei der Dichtmasse handelt es sich vorzugsweise um Bitumen bzw. um einen Polyamidkleber.

Der Gehäusebecher und der Gehäusedeckel eines erfindungsgemäßen galvanischen Elements sind vorzugsweise aus Metall gefertigt. Als metallischer Werkstoff ist z.B. vernickeltes Tiefziehblech geeignet. Bevorzugt sind u.a. auch Trimetalle, beispielsweise mit der Abfolge Nickel, Stahl (oder Edelstahl) und Kupfer (von außen nach innen).

Der Gehäusedeckel eines erfindungsgemäßen galvanischen Elements weist aufgrund seiner Ausgestaltung im Randabschnitt eine überraschend hohe Stabilität auf. Während herkömmliche Gehäusedeckel ohne umgeschlagenen Rand im Randbereich sehr labil sind und deshalb aus Stabilitätsgründen häufig nur als Gehäusedeckel mit relativ hohen Wandstärken verbaut werden können, lassen sich die Gehäusedeckel eines erfindungsgemäßen galvanischen Elements auch in sehr niedrigen Wandstärken verbauen.

Besonders bevorzugt weist der Gehäusedeckel eines erfindungsgemäßen galvanischen Elements eine Wandstärke zwischen 0,08 mm und 0,2 mm, insbesondere zwischen 0,1 mm und 0,15 mm, auf.

Ein Gehäusedeckel weist bevorzugt eine Höhe zwischen 2 mm und 15 mm, besonders bevorzugt zwischen 2 mm und 10 mm, insbesondere zwischen 3 mm und 6 mm, auf.

Eine besonders hohe Stabilität weist der Gehäusedeckel eines erfindungsgemäßen galvanischen Elements gegenüber radialem Druck im Randabschnitt auf. Diese Stabilität eröffnet mit besonderem Vorteil eine Möglichkeit, die Dichtigkeitseigenschaften des Gehäuses eines erfindungsgemäßen galvanischen Elements weiter zu optimieren.

Ein galvanisches Element nach der vorliegenden Erfindung weist nämlich einen Gehäusebecher auf, der im Bereich des Becherbodens radial nach innen eingezogen ist.

Durch das Einziehen des Becherbodens kann radialer Druck auf den an der Innenwand des Gehäusebechers anliegenden Randabschnitt des Gehäusedeckels erzeugt werden. Die zwischen Gehäusebecher und Gehäusedeckel angeordnete Foliendichtung wird dadurch in diesem Bereich zusammengepreßt, was in einem deutlich verbesserten Auslaufverhalten eines erfindungsgemäßen galvanischen Elements resultiert. Das Einziehen kann insbesondere beim oder nach dem auf die Montage des galvanischen Elements folgenden Umbördeln des Gehäusebechers erfolgen.

Vorzugsweise weist ein erfindungsgemäßes galvanisches Element im Bereich des Einzugs einen um 0,01 mm bis 0,15 mm, vorzugsweise um 0,05 mm bis 0,1 mm, verringerten Außendurchmesser auf.

Das Einziehen des Bederbodens erfolgt vorzugsweise mittels einer Kalibrierbuchse.

Die genannten und weitere Vorteile der Erfindung ergeben sich aus der Beschreibung der nun folgenden Beispiele und Zeichnungen in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

In den Zeichnungen zeigen:
- Fig. 1:: Querschnitt eines herkömmlichen Gehäusedeckels mit einer Foliendichtung nach dem Stand der Technik (Teilansicht).
- Fig. 2: Teilansicht des Gehäuses eines erfindungsgemäßen galvanischen Elements (Querschnitt) mit U-förmig nach außen gebogenem Gehäusedeckel
- Fig. 3: Querschnitt des Gehäusedeckels des in Fig. 5 dargestellten Gehäuses

Fig. 1 zeigt einen herkömmlichen Gehäusedeckel **101,** der eine scharfe Schnittkante im Randbereich **102** aufweisen kann, die unter ungünstigen Umständen eine als Dichtungselement **103** verwendete Folie durchschneiden könnte.

Fig. 2 zeigt im Querschnitt die Teilansicht des Gehäuses **500** einer bevorzugten Ausführungsform eines erfindungsgemäßen galvanischen Elements. Das Gehäuse weist einen Gehäusedeckel **501** und einen Gehäusebecher **502** auf. Zwischen dem Gehäusedeckel und dem Gehäusebecher ist eine Foliendichtung **503** angeordnet, die im unteren Bereich des Gehäuses um den abgerundeten Rand des Gehäusedeckels herumgeführt ist und leicht in den Zellinnenraum überlappt. Der Gehäusebecher weist einen Becherboden **504** und einen im wesentlichen zylindrisch ausgebildeten Bechermantel **505** auf, der im oberen Bereich umgebördelt ist. Im Bodenbereich weist der Gehäusebecher einen leichten Einzug 506 auf.

Fig. 3 zeigt den Querschnitt des Gehäusedeckels **501** aus Fig. 5. Der Deckel läßt sich grob in drei Bereiche einteilen, nämlich den Deckelboden **601,** den im wesentlichen zylindrisch ausgebildeten Abschnitt **602** und den sich daran anschließenden Randabschnitt **603.** Der Deckelboden weist einen planaren Zentralabschnitt **604** und einen abgeknickten Rand **605** auf. Der Randabschnitt ist als interessantester Aspekt zusätzlich vergrößert dargestellt. Deutlich zu erkennen ist die umgeschlagene Schnittkante **606** sowie der abgerundete Deckelrand **607.**

### Beispiel 1

Eine Knopfzelle mit herkömmlichem Aufbau weist ein Gehäuse mit einem Gehäusebecher mit einer Wandstärke von 0,1 - 0,2 mm, eine Foliendichtung mit einer Dicke von 0,03 - 0,05 mm und einen Gehäusedeckel mit einer Dicke 0,1 - 0,2 mm auf. Dadurch ergibt sich eine Gesamtaufbaudicke von 0,23 - 0,45 mm. Der Gehäusedeckel erweist sich jedoch am Rand als zu labil. Durch die Umlegung des Gehäusedeckels im Randbereich auf einer Länge von 0,25 mm wird im Randbereich eine Verdoppelung der Dicke des Deckels erzielt. Anschließend wird der Gehäusedeckel im Randbereich auf Außenmaß kalibriert. Der so verstärkte Deckel erfüllt die mechanischen Anforderungen wesentlich besser. Ein Einschneiden der Foliendichtung sowie eine Verletzung der Kathode bei der anschließenden Montage einer erfindungsgemäßen Knopfzelle wurden sicher vermieden.

### Beispiel 2

Eine erfindungsgemäße Zelle gemäß Beispiel 1 wurde nach dem Bördeln im Bodenbereich auf einer Länge von 0,4 mm um 0,05 - 0,1 mm im Durchmesser eingezogen. Dadurch wurde die Innenseite des Gehäusebechers über die Foliendichtung an den stabilen Rand des Deckels gedrückt. Die so herstellten Muster weisen ein deutlich verbessertes Auslaufverhalten auf.

## Patentansprüche

1. Galvanisches Element, insbesondere Knopfzelle, mit einem Gehäuse (500) umfassend einen Gehäusebecher (502), einen Gehäusedeckel (501) und eine Dichtung (503), die den Gehäusebecher gegen den Gehäusedeckel isoliert, wobei der Gehäusedeckel einen Deckelboden (601), einen daran angeschlossenen zylindrisch ausgebildeten Abschnitt (602) und einen sich daran anschließenden Randabschnitt (603) aufweist und wobei der Rand des Gehäusedeckels im Randabschnitt U-förmig nach außen umgebogen ist, **dadurch gekennzeichnet, dass** es sich bei der Dichtung (503) um eine Foliendichtung handelt und dass der Gehäusebecher (502) im Bereich des Becherbodens (504) radial nach innen eingezogen ist, so dass radialer Druck auf den an der Innenwand des Gehäusebechers (502) anliegenden Randabschnitt (603) des Gehäusedeckels erzeugt wird.

2. Galvanisches Element nach Anspruch 1, **dadurch gekennzeichnet, dass** der nach außen umgebogene Rand des Gehäusedeckels radial nach innen eingezogen ist.

3. Galvanisches Element nach Anspruch 2, **dadurch gekennzeichnet, dass** der Gehäusedeckel im Randabschnitt (603) einen maximalen Außendurchmesser aufweist, der im wesentlichen dem Außendurchmesser des zylindrisch ausgebildeten Abschnitts (602) entspricht.

4. Galvanisches Element nach einem der Ansprüche 1 bis 3 mit einem Gehäuse (500), umfassend
- einen Gehäusebecher (502) mit einem Becherboden (504) und einem im wesentlichen zylindrisch ausgebildeten Bechermantel (505),
- einem Gehäusedeckel (501) mit einem Deckelboden (601), einen umlaufenden, im verschlossenen Zustand des Gehäuses an der Innenwand des Gehäusebechers anliegenden, im wesentlichen zylindrisch ausgebildeten Abschnitt (602) und einem sich daran anschließenden Randabschnitt (603) und
- eine Foliendichtung (503), die den Gehäusebecher und den Gehäusedeckel gegeneinander isoliert,
wobei der Rand des Gehäusedeckels im Randabschnitt U-förmig nach außen umgeschlagen und radial nach innen eingezogen ist.

5. Galvanisches Element nach einem der vorhergehenden Ansprüche, **dadurch gekennzeichnet, dass** die Foliendichtung (503) aus einer tiefziehbaren Folie gebildet ist.

6. Galvanisches Element nach einem der vorhergehenden Ansprüche, **dadurch gekennzeichnet, dass** die Foliendichtung (503) aus einem Polyamid gebildet ist.

7. Galvanisches Element nach einem der vorhergehenden Ansprüche, **dadurch gekennzeichnet, dass** die Foliendichtung (503) aus einer hochtemperaturbeständigen Folie gebildet ist.

8. Galvanisches Element nach Anspruch 7, **dadurch gekennzeichnet, dass** die Foliendichtung (503) aus Polyetheretherketon gebildet ist.

9. Galvanisches Element nach einem der vorhergehenden Ansprüche, **dadurch gekennzeichnet, dass** die Foliendichtung (503) eine Dicke zwischen 0,01 mm und 0,3 mm aufweist.

10. Galvanisches Element nach einem der vorhergehenden Ansprüche, **dadurch gekennzeichnet, dass** der Gehäusebecher (502) im Bereich des Einzugs (506) einen um 0,01 mm bis 0,15 mm verringerten Außendurchmesser aufweist.

## Claims

1. A galvanic element, in particular a button cell, having a housing (500) comprising a housing cup (502), a housing cover (501) and a seal (503), which isolates the housing cup from the housing cover, wherein the housing cover has a cover base (601), a cylindrical section (602) adjacent to it and an edge section (603) adjacent to it, and wherein the edge of the housing cover is bent around outwards in a U-shape in the edge section,
**characterized in that**
the seal (503) is a film seal and **in that** the housing cup (502) is drawn radially inwards in the area of the cup base (504) such that radial pressure is produced on that edge section (603) of the housing cover which rests on the inner wall of the housing cup (502).

2. The galvanic element according to claim 1, **characterized in that** the edge of the housing cover which is bent around outwards is drawn radially inwards.

3. The galvanic element according to claim 2, **characterized in that** in the edge section (603) the housing cover has a maximum external diameter which corresponds essentially to the external diameter of the cylindrical section (602).

4. The galvanic element according to any one of claims 1 to 3, having a housing (500), comprising
- a housing cup (502) with a cup base (504) and an essentially cylindrical cup casing (505),
- a housing cover (501) with a cover base (601), a circumferential, essentially cylindrical section (602) which rests on the inner wall of the housing cup when the housing is in the closed state, and an edge section (603) adjacent to it, and
- a film seal (503) which isolates the housing cup and the housing cover from one another,
wherein the edge of the housing cover is swaged around outwards in a U-shape, and is drawn radially inwards, in the edge section.

5. The galvanic element according to any one of the preceding claims, **characterized in that** the film seal (503) is formed from a film which can be thermoformed.

6. The galvanic element according to any one of the preceding claims, **characterized in that** the film seal (503) is made of polyamide.

7. The galvanic element according to any one of the preceding claims, **characterized in that** the film seal (503) is formed from a film which is resistant to high temperatures.

8. The galvanic element according to claim 7, **characterized in that** in the film seal (503) is made of polyetheretherketone.

9. The galvanic element according to any one of the preceding claims, **characterized in that** the film seal (503) has a thickness of between 0.01 mm and 0.3 mm.

10. The galvanic element according to any one of the preceding claims, **characterized in that** the housing cup (502) has an external diameter which is reduced by 0.01 mm to 0.15 mm in the area of the indent (506).

## Revendications

1. Élément galvanique, en particulier pile-bouton, avec un boîtier (10) comprenant une coupelle de boîtier (502), un couvercle de boîtier (501) et un joint d'étanchéité (503) qui isole la coupelle de boîtier du couvercle de boîtier, le couvercle de boîtier présentant un fond de couvercle (601), une portion s'y raccordant (602) réalisée sous forme cylindrique et une portion de bord s'y raccordant (603) et le bord du couvercle de boîtier étant recourbé vers l'extérieur en forme de U dans la portion de bord, **caractérisé en ce que** le joint d'étanchéité (503) est un joint d'étanchéité à film et la coupelle de boîtier (502) est rentrée radialement vers l'intérieur dans la région du fond de coupelle (504) de telle sorte qu'une pression radiale soit produite sur la portion de bord (603) du couvercle de boîtier s'appliquant contre la paroi intérieure de la coupelle de boîtier (502).

2. Élément galvanique selon la revendication 1, **caractérisé en ce que** le bord du couvercle de boîtier recourbé vers l'extérieur est rentré radialement vers l'intérieur.

3. Élément galvanique selon la revendication 2, **caractérisé en ce que** le couvercle de boîtier présente, dans la portion de bord (603), un diamètre extérieur maximal qui correspond essentiellement au diamètre extérieur de la portion (602) réalisée sous forme cylindrique.

4. Élément galvanique selon l'une quelconque des revendications 1 à 3, avec un boîtier (500), comprenant
- une coupelle de boîtier (502) avec un fond de coupelle (504) et une enveloppe de coupelle (505) réalisée essentiellement sous forme cylindrique,
- un couvercle de boîtier (501) avec un fond de couvercle (601), une portion périphérique (602) réalisée essentiellement sous forme cylindrique, s'appliquant dans l'état fermé du boîtier contre la paroi intérieure de la coupelle de boîtier et une portion de bord (603) s'y raccordant et
- un joint d'étanchéité à film (503) qui isole l'un de l'autre la coupelle de boîtier et le couvercle de boîtier,
le bord du couvercle de boîtier étant recourbé vers l'extérieur en forme de U dans la portion de bord et étant rentré radialement vers l'intérieur.

5. Élément galvanique selon l'une quelconque des revendications précédentes, **caractérisé en ce que** le joint d'étanchéité à film (503) est formé d'un film pouvant être embouti profond.

6. Élément galvanique selon l'une quelconque des revendications précédentes, **caractérisé en ce que** le joint d'étanchéité à film (503) est formé d'un polyamide.

7. Élément galvanique selon l'une quelconque des revendications précédentes, **caractérisé en ce que** le joint d'étanchéité à film (503) est formé d'un film résistant aux hautes températures.

8. Élément galvanique selon la revendication 7, **caractérisé en ce que** le joint d'étanchéité à film (503) est formé de polyétheréthercétone.

9. Élément galvanique selon l'une quelconque des revendications précédentes, **caractérisé en ce que** le joint d'étanchéité à film (503) présente une épaisseur comprise entre 0,01 mm et 0,3 mm.

10. Élément galvanique selon l'une quelconque des revendications précédentes, **caractérisé en ce que** la coupelle de boîtier (502) présente dans la région du rentré (506) un diamètre extérieur réduit de 0,01 mm à 0,15 mm.
